# EUROPÄISCHE PATENTANMELDUNG

(11) **EP 1 011 272 A1**
(43) Veröffentlichungstag der Anmeldung: **21.06.2000**
(21) Anmeldenummer: 99123618.3
(22) Anmeldetag: 27.11.1999
(51) Int. Cl.: H04Q 3/00

(54) **Leitweglenkung zu persönlichen Rufnummern in einem intelligenten Netz**

(30) Priorität: 18.12.1998 DE 19860293
(71) Anmelder: DeTeWe - Deutsche Telephonwerke Aktiengesellschaft & Co., 10997 Berlin (DE)
(72) Erfinder: Jerono, Winfried, Dr, 24229 Dänischhagen (DE); Weise, Wieland, Dr., 24116 Kiel (DE); Dose, Nils, 24582 Brügge (DE); Petersen, Mike Uwe, 24582 Wattenbek (DE)

(57) **Zusammenfassung**

Die Erfindung betrifft Verfahren zum Routen einer TK-Verbindung an mindestens eines einer Mehrzahl von Endgeräten unter Verwendung eines intelligenten Netzes (IN), einer endgeräteseitigen Steuereinheit (PCS-Anlage) und einer persönlichen Rufnummer (PCS-Nummer), bei dem ein unter der persönlichen Rufnummer eingehender Verbindungswunsch in Abhängigkeit eines voreingestellten Routing-Profils vom intelligenten Netz geroutet wird. Erfindungsgemäß werden in einem ersten Verfahren Signalisierungsinfomationen zwischen dem intelligenten Netz und der Steuereinheit mittels eines Protokolls übertragen, das bei der Signalisierung vom intelligenten Netz zur Steuereinheit auf FSK-Signalen und bei der Signalisierung von der Steuereinheit zum intelligenten Netz auf DTMF-Signalen basiert. In einem zweiten Verfahren signalisert das Steuergerät dem intelligenten Netz automatisch, ob sich ein der Steuereinheit zugeordnetes Endgerät in einem der Steuereinheit zugeordneten Bereich befindet, und routet das intelligente Netz in Abhängigkeit von diesen Signalisierungsinformationen einen ankommenden Ruf an die Steuereinheit oder ein defaultmäßig vorgegebenes Endgerät.

## Beschreibung

Die Erfindung betrifft Verfahren zum Routen einer Telekommunikations-(TK) Verbindung gemäß den Oberbegriffen der Ansprüche 1 und 22 und eine Steuereinheit zur Durchführung des Verfahrens nach Anspruch 1.

Mit dem Schlagwort "Personal Communication System" (PCS) werden Kommunikationssysteme bezeichnet, in denen ein Teilnehmer mittels einer persönlichen Rufnummer (PCS-Nummer) stets erreichbar ist. Hierzu leitet ein intelligentes Netz (IN) einen unter der persönlichen Rufnummer eingehenden Verbindungswunsch auf der Grundlage eines vordefinierten Profils, das der Teilnehmer im Netz hinterlegt, selbständig weiter.

Beispielsweise werden unter der persönlichen Rufnummer eingehende Anrufe zwischen 8.00 Uhr und 12.00 Uhr morgens auf das Mobiltelefon, zwischen 12.00 Uhr und 19.00 Uhr auf das Bürotelefon und nach 19.00 Uhr auf den privaten Anschluß des Teilnehmers geleitet. Auch kann vorgesehen sein, bei Nichterreichbarkeit des Teilnehmers unter der im Profil zunächst vorgesehenen Nummer ein Gespräch an eine weitere im Profil hinterlegte Nummer oder an einen Anrufbeantworter weiterzuleiten. Bei Deaktivierung jeglicher Rufumleitung werden Gespräche an eine festgelegte Nummer, etwa die Mobilfunknummer des Teilnehmer geleitet.

Die bekannten Verfahren zur Verwirklichung eines PCS-Kommunikationssystems, das die ständige Erreichbarkeit eines Teilnehmers unter seiner persönlichen Rufnummer gewährleistet, beruhen auf dem ISDN-Standard. Dieser ermöglicht durch Zurverfügungstellung eines eigenen Zeichengabekanals (D-Kanals) eine einfache Signalisierung zwischen den Endgeräten, einer PCS-Steuereinheit und dem intelligenten Netz. Angesichts der hohen Zahl nach wie vor analoger Telekommunikationsanschlüsse besteht jedoch ein Bedarf, das PCS-System auch an analogen Anschlüssen zu verwirklichen und hierzu PCS-Steuereinheiten, über die ein Nutzer ein gewünschtes Routing-Profil eingeben und die PCS-bezogene Signalisierungsaufgaben erfüllen, an einen analogen Anschluß anzuschließen.

Der Erfindung liegt die Aufgabe zugrunde, Verfahren zum Routen einer TK-Verbindung, bei denen zwischen einer Steuereinheit und einem intelligenten Netz Signalisierungsinformationen ausgetauscht werden, sowie eine entsprechende Steuereinheit zur Verfügung zu stellen, die die Verwirklichung der Funktionalitäten eines PCS-Kommunikationssystems auch an einem analogen TK-Anschluß ermöglichen.

Diese Aufgabe wird erfindungsgemäß durch ein Verfahren mit den Merkmalen des Anspruchs 1, ein Verfahren mit den Merkmalen des Anspruchs 22 und eine Steuereinheit mit den Merkmalen des Anspruchs 26 gelöst. Bevorzugte und vorteilhafte Weiterbildungen der Erfindung sind in den Unteransprüchen angegeben.

Danach zeichnet sich ein erstes erfindungsgemäßes Verfahren dadurch aus, daß zwischen einer an dem analogen Anschluß angeschlossenen PCS-Steuereinheit und dem intelligenten Netz Signalisierungsinformationen nach einem Protokoll ausgetauscht werden, das bei der Signalisierung vom intelligenten Netz zur Steuereinheit auf FSK-Signalen und bei der Signalisierung von der Steuereinheit zum intelligenten Netz auf DTMF-Signalen basiert. Die Informationen werden dabei als Inband-Informationen, d.h. auf demselben Kanal wie analoge Sprachinformationen, übertragen.

Mit Vorteil greift die Erfindung auf definierte Standards bzw. Protokolle zur Übertragung von Daten an einen bzw. von einem analogen Anschluß zurück. Die Informationen werden bei einer Signalisierung zum intelligenten Netz durch an sich bekannte DTMF- (Dual Tone Multi-Frequency) Signale kodiert. In Richtung vom intelligenten Netz zur PCS-Steuereinheit werden digitale Daten mittels FSK- (Frequency Shift Keying) modulierten Signalen übertragen. FSK-Sequenzen weisen gegenüber DTMF-Sequenzen den Vorteil einer höheren Übertragungsrate (1200 Baud) auf.

In einer bevorzugten Ausgestaltung der Erfindung stellt ein Nutzer an der PCS-Steuereinheit ein gewünschtes Routing-Profil ein und werden die entsprechenden Signalisierungsinformationen mittels einer DTMF-Sequenz an das intelligente Netz gesendet (Profiländerung). Eine Kopie des eingestellten bzw. geänderten Profils wird dabei in der Steuereinheit gespeichert, damit die aktuelle Einstellung durch den Teilnehmer jederzeit ohne das Erfordernis einer gesonderten Signalisierung zum intelligenten Netz abgefragt werden kann.

Weiter kann die PCS-Steuereinheit in einer bevorzugten Ausgestaltung eine Signalisierungsnachricht zur Abfrage des aktuellen, im intelligenten Netz hinterlegten Profils zum intelligenten Netz senden (Statusabfrage). Die Statusabfrage dient der Aktualisierung der Einstellung des Profils der PCS-Steuereinheit.

Die bei einer Profiländerung oder einer Statusabtrage an das intelligente Netz übertragenen Informationen enthalten zumindest die persönliche Nummer (PCS-Nummer) des Teilnehmers und Informationen darüber, ob eine Statusabfrage oder eine Profiländerung vorliegt. Im letzteren Fall ist des weiteren zumindest die Rufumleitungs-Zielnummer, an die eine Rufumleitung erfolgen soll, enthalten. Durch die PCS-Nummer kann das intelligente Netz die PCS-Steuereinheit identifizieren.

Eine Informationsübertragung vom intelligenten Netz zur PCS-Steuereinheit erfolgt erfindungsgemäß über FSK- (Frequency Shift Keying) modulierte Signale. Zur Informationsübertragung mittels FSK-Signalen auf analogen Leitungen kann auf die Standards ETS 300659-1 und ETS 300 778-1 der ETSI (European Telecommunication Standards Institute) zurückgegriffen werden, auf die insofern ausdrücklich Bezug genommen wird.

In einer bevorzugten Ausgestaltung der Erfindung werden vom intelligenten Netz an die PCS-Steuereinheit Informationen betreffend das eingestellte Routing-Profil übertragen. Dies kann entweder im Rahmen eines "Command Call" nach einer über das intelligente Netz vorgenommenen externen Profiländerung oder im Rahmen eines "Status Call" im Rahmen einer Statusabfrage der PCS-Steuereinheit erfolgen. Bei einer extern veranlaßten Profiländerung wird das neue Routing-Profil vom intelligenten Netz bevorzugt erst dann übernommen, nachdem die Steuereinheit den Empfang des neuen Routing-Profils bestätigt hat. Hierzu sendet die Steuereinheit eine ACKnowledge-Sequenz per DTMF an das intelligente Netz.

In einer vorteilhaften Ausbildung des Verfahrens signalisiert die Steuereinheit dem intelligenten Netz automatisch, wenn sich ein der Steuereinheit zugeordnetes Endgerät, insbesondere DECT-Endgerät, in einem der Steuereinheit zugeordneten Bereich, insbesondere einem DECT-Versorgungsbereich, befindet, und wird ein eingehender Verbindungswunsch für diesen Fall an die Steuereinheit bzw. das dieser zugeordnete Endgerät geroutet. Dadurch werden Rufe automatisch an die Steuereinheit geleitet, sobald sich der Teilnehmer im "Heimbereich" befindet. Die Signalisierung zum intelligenten Netz besteht im einfachsten Fall lediglich in einer Aktivierung/Deaktivierung einer Rufumleitung. Entsprechend können einfache Protokollelemente zur Signalisierung verwendet werden.

Ein zweites erfindungsgemäßes Verfahren zum Routen einer TK-Verbindung an mindestens eines einer Mehrzahl von Endgeräten zeichnet sich dadurch aus, daß das Steuergerät dem intelligenten Netz automatisch signalisiert, ob sich ein der Steuereinheit zugeordnetes Endgerät in einem der Steuereinheit zugeordneten Bereich befindet, und das intelligente Netz in Abhängigkeit von diesen Informationen einen ankommenden Ruf entweder an die Steuereinheit oder ein defaultmäßig vorgegebenes Endgerät routet.

Die Signalisierungsinformationen werden dabei bevorzugt in einfacher Weise durch zwei unterschiedliche Servicenummern des intelligenten Netzes kodiert, wobei die Steuereinheit die eine oder die andere Servicenummer in Abhängigkeit davon anruft, ob das Endgerät sich in dem der Steuereinheit zugeordneten Bereich befindet oder nicht.

Diese Erfindungsvariante stellt ein vereinfachtes Verfahren zur Signalisierung von der Steuereinheit an das intelligente Netz zur Verfügung, wobei Informationen nur in eine Richtung übertragbar sind. Auch ist die direkte Einrichtung einer Rufumleitung nicht möglich. Das intelligente Netz kann aber anhand der von der Steuereinheit übertragenen Informationen die Deaktivierung bzw. Aktivierung einer Rufumleitung vornehmen.

Dieses Verfahren ist besonders bei Verwendung von Endgeräten nach dem Standard DECT geeignet, wobei es sich dann bei dem der PCS-Steuereinheit zugeordneten Bereich um einen DECT-Versorgungsbereich handelt und die PCS-Steuereinheit dem intelligenten Netz mitteilt, ob sich ein DECT-Endgerät im DECT-Versorgungsbereich befindet oder nicht. Hierzu nimmt die Steuereinheit oder ein der Steuereinheit zugeordnetes Gerät ein periodisches Paging vor, auf das eine Antwort erfolgt, wenn ein PCS-Teilnehmer bzw. ein DECT-Endgerät den DECT-Versorgungsbereich betritt.

Diese Erfindungsvariante zeichnet sich durch einen minimalen Signalisierungsaufwand aus. Dies ist insbesondere von Vorteil, wenn eine Signalisierung erfolgen soll, während der analoge Anschluß besetzt ist. Die Unterbrechung des anliegenden Gespräches, das in der Vermittlungsstelle auf "Halten" gesetzt wird, ist dann zeitlich minimal.

Die Erfindung wird nachfolgend unter Bezugnahme auf die Figuren der Zeichnung anhand mehrerer Ausführungsbeispiele näher erläutert. Es zeigen:
- Fig. 1 -: die Konfiguration einer PCS-Steuereinheit an einem analogen Amtsanschluß;
- Fig. 2 -: schematisch den Aufbau einer erfindungsgemäßen PCS-Steuereinheit;
- Fig. 3 -: ein Ablaufdiagramm bei einer Signalisierung vom intelligenten Netz zur PCS-Steuereinheit betreffend eine Profiländerung;
- Fig. 4 -: den Aufbau eines Protokollelements zur Signalisierung vom intelligenten Netz zur PCS-Steuereinheit mittels FSK-Sequenz;
- Fig. 5 -: ein Ablaufdiagramm bei einer Signalisierung vom intelligenten Netz zur PCS-Steuereinheit, wenn der analoge Anschluß besetzt ist;
- Fig. 6 -: ein Ablaufdiagramm bei einer Signalisierung von der PCS-Steuereinheit an das intelligente Netz betreffend eine Profiländerung;
- Fig. 7a -: den Aufbau eines Protokollelements zur Signalisierung von der PCS-Steuereinheit zum intelligenten Netz mittels DTMF-Sequenz;
- Fig. 7b -: den Aufbau eines ACKnowledge-Protokollelements zur Signalisierung von der PCS-Steuereinheit zum intelligenten Netz und
- Fig. 8 -: ein Ablaufdiagramm bei einer verkürzten Signalisierung von der PCS-Steuereinheit an das intelligente Netz.

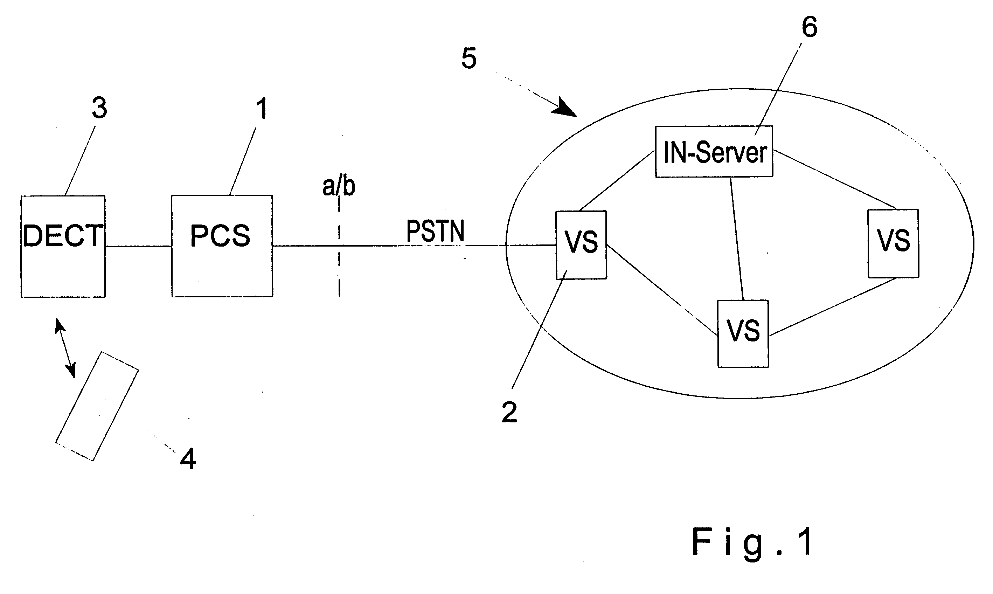

Fig. 1 zeigt eine erfindungsgemäße Steuereinheit 1 für ein Personal Communication System (PCS), nachfolgend PCS-Steuereinheit oder PCS-Anlage genannt, die über eine analoge Nutzer/Netz Schnittstelle a/b und eine PSTN-Leitung mit einer Ortsvermittlungsstelle (VS) 2 des öffentlichen oder eines privaten Telekommunikationsnetzes verbunden ist.

Der PCS-Anlage 1 ist in dem vorliegenden Ausführungsbeispiel eine DECT-Basisstation 3 zugeordnet. Als Mobilteil ist ein Dual-Mode-Gerät 4 vorgesehen, welches sowohl den DECT- als auch den GSM-Standard unterstützt. Dabei wird darauf hingewiesen, daß das Endgerät grundsätzlich eine beliebige TK-Einheit sein kann, etwa auch ein schnurgebundenes Telefon, ein reines DECT Gerät, oder Dual- und Multimode Geräte, die nach anderen Standards als DECT arbeiten.

In einer alternativen Ausführungsforn ist die DECT-Basisstation 3 in die PCS-Anlage 1 integriert.

Das Netz 5 ist als intelligentes Netz ausgebildet, d.h. es kann bestimmte, über eine reine Gesprächsvermittlung hinausgehende Funktionalitäten zur Verfügung stellen. Im vorliegenden Zusammenhang ist von Bedeutung, daß das intelligente Netz 5 auf der Grundlage eines vorgegebenen Profils Rufumleitungen vornehmen kann. Gemäß dem PCS-System werden vom intelligenten Netz Rufumleitungen für unter der PCS-Nummer eingehende Verbindungswünsche vorgenommen.

In an sich bekannter Weise kann eine Rufumleitung stets (CFU - Call Forward Unconditional), nur im Besetztfall (CFB - Call Forward Busy) oder falls sich der Teilnehmer nach einer bestimmten Zeit nicht meldet (CFNR - Call Forward No Reply) erfolgen. Die Funktionalität der Rufumleitung aufgrund eines vorgegebenen Profils ist etwa in einem Server 6 des intelligenten Netzes verwirklicht, der mit verschiedenen Vermittlungsstellen 2 verbunden ist. Die Funktionalität wird beispielsweise durch geeignete Software auf einem Großrechner im Netz verwirklicht.

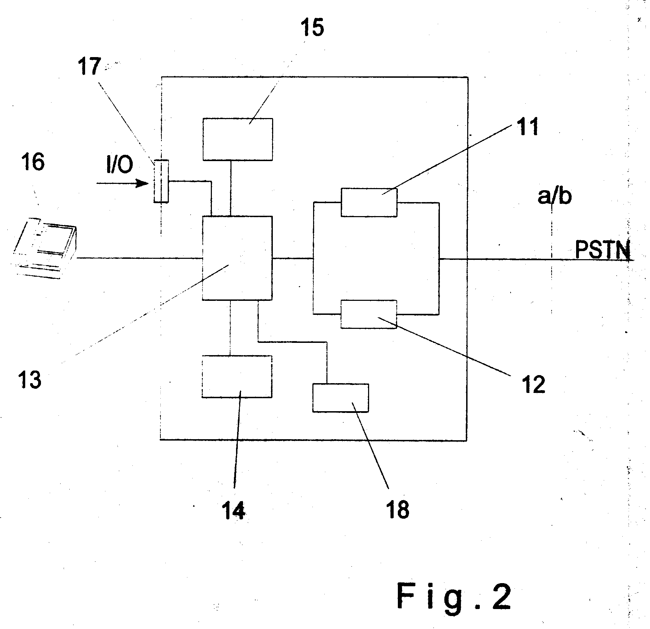

Fig. 2 zeigt schematisch den Aufbau einer PCS-Anlage 1. Die PCS-Anlage 1 weist eine FSK-Empfangseinheit 11 zum Empfangen von FSK-Sequenzen, einen DTMF-Generator 12 zum Generieren von DTMF-Sequenzen und Steuermittel 13 auf. Die Steuermittel 13 sind über die FSK-Empfangseinheit 11 und den DTMF-Generator 12 an die analoge Schnittstelle a/b einer Amtsleitung angeschlossen. Sie weisen einen Mikroprozessor zur Durchführung der Steuerfunktionen auf.

Die Steuermittel 13 sind des weiteren mit einem Datenspeicher 14 zum Speichern von Routingprofilen und einer Erkennungslogik 15 verbunden. Die Erkennungslogik 15 ermittelt, ob sich ein DECT-Endgerät in einem der PCS-Anlage zugeordneten DECT-Versorgungsbereich befindet. Die Erkennungslogik 15 ist optional.

Weiter weist die Steuereinheit 1 einen Anrufbeantworter bzw. eine Mailbox 18 auf, die ebenfalls mit den Steuermitteln 13 verbunden ist und an die bei einer Nichterreichbarkeit eines Teilnehmers unter den im Routing-Profil hinterlegten Nummern eine Verbindung bevorzugt geroutet wird.

Alternativ ist der Anrufbeantworter Teil des intelligenten Netzes sein. Eine Rufweiterleitung an den Anrufbeantworter ist dann nicht identisch mit einer Rufweiterleitung an die PCS-Anlage 1, so daß auch im Besetzt-Fall Zugang zum Anrufbeantworter besteht.

Schließlich ist eine I/O-Schnittstelle 17 vorgesehen, die ebenfalls mit den Steuermitteln 13 verbunden ist. Über die I/O-Schnittstelle 17 kann ein Nutzer ein bestimmtes Routingprofil eingeben bzw. ein vorhandenes Routingprofil ändern sowie übliche Steuerbefehle eingeben. Die Einstellung kann z.B. menügesteuert oder auch über das Handset/Telefon vorgenommen werden. Das aktuelle Profil wird jeweils in dem Datenspeicher 14 abgespeichert, so daß ein Nutzer es kurzfristig abfragen kann.

Die Erkennungslogik 15, die auch in der DECT-Basisstation 3 verwirklicht sein kann, ruft zyklisch nach sich im DECT-Versorgungsbereich befindlichen Endgeräten. Sofern sich ein DECT-Endgerät 4 im DECT-Versorgungsbereich befindet, wird dies von der Erkennungslogik 15 erkannt und diese Information an die Steuermittel 13 übertragen ("attach": DECT Location Registration). Ebenso teilt die Erkennungslogik 15 den Steuermitteln 13 mit, wenn ein PCS-Teilnehner bzw. dessen DECT-Endgerät 4 den DECT-Versorgungsbereich verläßt ("detach": DECT Detach bzw. keine Antwort auf periodisches Pagen durch die Anlage).

An die PCS-Anlage können beliebige Endgeräte wie ein analoges Telefon 16 angeschlossen sein.

Wie anhand der nachfolgenden Figuren im einzelnen beschrieben werden wird, sendet die PCS-Anlage 1 zur Übertragung von Signalisierungsinformationen DTMF-Sequenzen an das intelligente Netz 5. Hierzu erzeugt die Auswerteinheit 13 in Abhängigkeit von dem eingestellten Routing-Profil sowie empfangener Signalisierungsinformationen Steuersignale zur Generierung von DTMF-Signalen durch den DTMF-Generator 12. Signalisierungsinformationen vom intelligenten Netz an die PCS-Anlage 1 werden durch FSK-Modulation übertragen, die entsprechenden Informationen durch den FSK-Empfänger 11 empfangen und anschließend durch die Steuermittel 13 decodiert und ausgewertet.

Die Signalisierung zwischen der PCS-Anlage 1 und dem intelligenten Netz 5 betrifft insbesondere folgende Fälle: Erstens erfolgt eine externe Einstellung bzw. Änderung des Routing-Profils durch einen PCS-Teilnehmer, etwa durch Anruf einer Servicenummer des intelligenten Netzes (IN-Servicenummer). Bei einer derartigen externen Profiländerung teilt das intelligente Netz das geänderte Profil der PCS-Anlage 1 mit. Zweitens stellt ein PCS-Teilnehmer über die I/O-Schnittstelle 17 der PCS-Anlage 1 das Profil direkt an der PCS-Anlage ein und wird das neu eingestellte Profil an das intelligente Netz übertragen. Drittens erfolgt durch die PCS-Anlage eine Statusabfrage betreffend das aktuell eingestellte Profil an das intelligente Netz und teilt dieses daraufhin der PCS-Anlage das aktuelle Profil mit. Viertens wird eine Rufumleitung automatisch deaktiviert, wenn ein Teilnehmer den DECT Versorgungsbereich der Steuereinheit betritt, so daß ankommende Rufe dann an die Steuereinheit bzw. den Heimbereich übertragen werden.

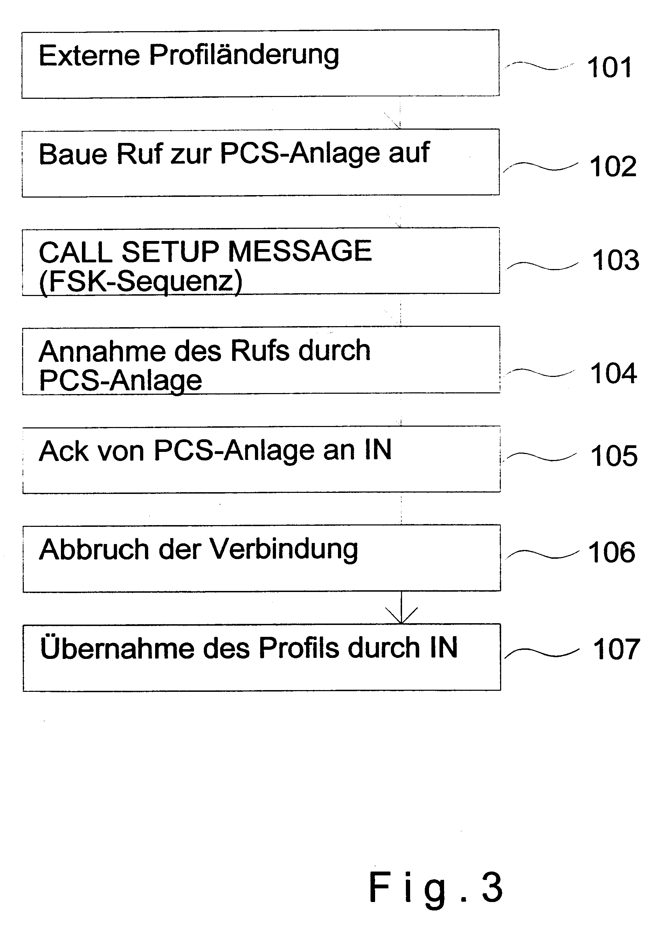

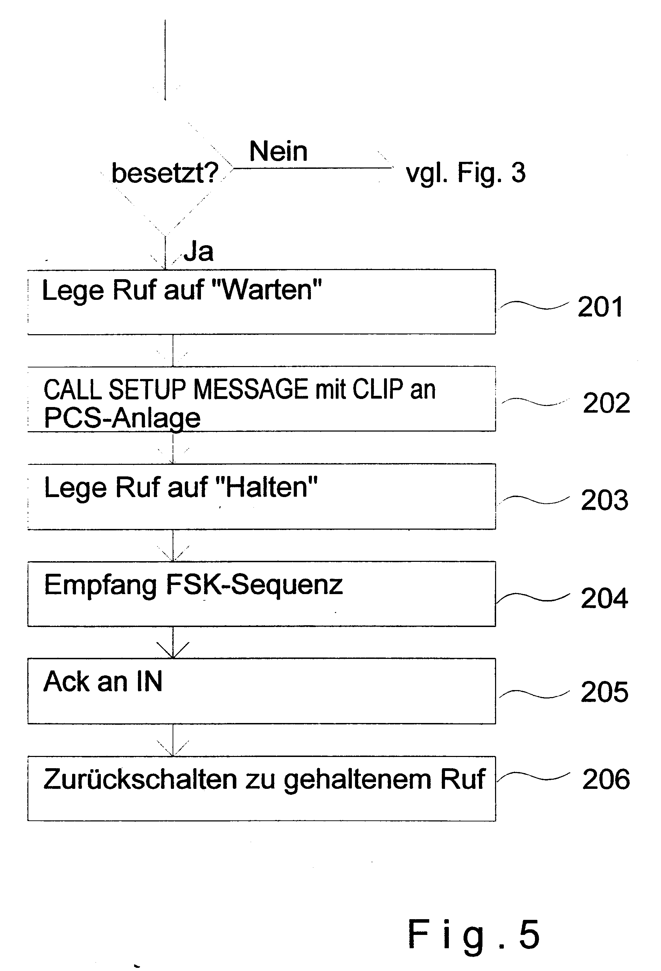

Anhand der Fig. 3 wird der erste Fall näher erläutert. Zunächst findet in Schritt 101 eine externe Profiländerung statt. Hierzu ruft beispielsweise ein PCS-Teilnehmer über sein Mobilfunktelefon eine IN-Servicenummer an und hinterlegt ein Profil über eine DTMF-Sequenz. Alternativ ruft er eine Hotline an, die das gewünschte Profil entgegennimmt und im intelligenten Netz abspeichert.

Nach der Profiländerung baut das intelligente Netz in Schritt 102 einen Ruf zur PCS-Anlage 1 auf. In Schritt 103 wird als Inband-Signal ein Protokollelement CALL SETUP MESSAGE mittels einer FSK-Sequenz an die PCS-Anlage 1 übertragen. Die in dem CALL SETUP MESSAGE Protokollelement enthaltenen Parameter und Informationen werden anhand Fig. 4 näher erläutert werden.

Die Übertragung des CALL SETUP MESSAGE Protokollelements kann vor dem ersten Klingelimpuls oder in der Pause nach dem ersten Klingelimpuls erfolgen. Beide Varianten sind in dem Standard ETS 300659-1 vorgesehen und erläutert. Bei beiden Varianten nimmt die PCS-Anlage 1 in Schritt 104 den Ruf nach dem Ende der FSK-Sequenz an und überträgt in Schritt 105 eine Bestätigung (ACKnowledge Protokollelement) über den Erhalt der Daten per DTMF-Sequenz an das intelligente Netz zurück. Nach dem Senden der DTMF-Bestätigung beendet die PCS-Anlage in Schritt 106 die Verbindung. Die externe Profiländerung wird vom intelligenten Netz erst nach Erhalt der positiven Bestätigung (ACKnowledge) durch die PCS-Anlage 1 übernommen. Dies erfolgt in Schritt 107.

Der vom intelligenten Netz kommende Ruf wird dem Teilnehmer bevorzugt nicht signalisiert, d.h. ein Klingeln wird unterdrückt. Hierzu wertet die PCS-Anlage 1 bei jedem kommenden Ruf erst die FSK-Nachricht aus, sofern vorhanden, und signalisiert den ersten Klingelpuls verzögert bzw. gar nicht. Bei einem vom intelligenten Netz kommenden Ruf wird die "hook-off-taste" für die Dauer der Übertragung ignoriert.

Fig. 4 zeigt den Aufbau und die Parameter des Protokollelements CALL SETUP MESSAGE, das bei der Mitteilung des aktuellen Routing-Profils vom intelligenten Netz an die PCS-Anlage gesendet wird. Das CALL SETUP MESSAGE Protokollelement ist standardgemäß in dem Standard ETS 300659-1 beschrieben. Im Rahmen der erfindungsgemäßen Signalisierung weisen die standardgemäß vorgesehenen Parameter des CALL SETUP MESSAGE Protokollelementes jedoch andere Inhalte als standardgemäß vorgesehen auf, wie in Fig. 4 dargestellt. Was die technischen Details der Datenübertragung mittels FSK, etwa die Verwendung von Trigger-Signalen oder die verwendeten Formate angeht, so wird diesbezüglich auf den Standard ETS 300659-1 verwiesen.

Erfindungsgemäß wird in den Parameter "Calling line identity" des CALL SETUP MESSAGE Protokollelements die IN-Servicenummer eingetragen. Hierzu stehen in der aktuellen Version des Standards maximal 20 Zeichen zur Verfügung. In den standardgemäß vorgesehenen Parameter "Calling party name" werden die Länge der PCS-Nummer (2 Zeichen), die Länge der Rufumleitungs- (CFₓ) Zielnummer (2 Zeichen), die PCS-Nummer des Teilnehmers (maximal 20 Zeichen), User Informationen (2 Zeichen) und die CFₓ-Zielnummer (maximal 20 Zeichen) eingetragen.

Die Codierung der Einträge unter "Calling line identity" und "Calling party name" erfolgt gemäß ITU-T REC.T.50. Das Element "User Info" wird in zwei Nibble zerlegt, wobei als Zeichen 0-9, A-F kodiert werden. Das Element "User info" kodiert, ob ein "Command Call" oder ein "Status Call" vorliegt. Die Codes für die Einträge unter den Parametern "Call type" und "Network message system Status" sind in ETS 300659-1 festgelegt.

Das Element "Länge der CFₓ-Zielnummer" des Protokollelements gibt an, ob eine CFₓ-Zielnummer überhaupt ausgewertet werden muß. Wenn dieses Element den Wert "null" enthält, so ist keine CFₓ-Zielnummer definiert und eine Rufumleitung deaktiviert. Die Länge der CALL SETUP MESSAGE kann daher verkürzt und die Signalisierung vereinfacht werden.

Allerdings kann eine Rufumleitung auch im Fall, daß keine CFₓ-Zielnummer übertragen wird, dadurch eingerichtet werden, daß das Element "User Info" einen Hinweis auf eine Default-Umleitung, z.B. die im intelligenten Netz bekannte GSM-Nummer des PCS-Teilnehmers, enthält. Es handelt sich dabei um einen anderen Eintrag als bei der Kodierung, ob ein "Command Call" oder ein "Status Call" vorliegt.

In Fig. 5 ist der Besetztfall des analogen Anschlusses dargestellt. Sofern bei einem Ruf vom intelligenten Netz zur PCS-Anlage der analoge Anschluß besetzt ist, so stellt dies zunächst ein Problem insofern dar, als die ständige Erreichbarkeit des PCS-Teilnehmers unter Umständen nicht gegeben ist, da die Aktivierung oder Deaktivierung einer Rufumleitung nicht oder nur mit einer möglicherweise erheblichen zeitlichen Verzögerung durchgeführt werden kann. Dies betrifft auch die externe Änderung eines Profils, da ein neues Profil vorzugsweise nur eingerichtet wird, nachdem die PCS-Anlage eine positive Bestätigung gesendet hat.

Um die genannten Probleme zu vermeiden, legt die zugeordnete Vermittlungsstelle VS bei einer vom intelligenten Netz ausgehenden Signalisierung im Besetztfall den Ruf in Schritt 201 zunächst auf "Warten". Anschließend werden an die PCS-Anlage in Schritt 202 mittels eines CALL SETUP MESSAGE Protokollelements gemäß Fig. 4 die zu übertragenden Signalisierungsinformationen übertragen. Die PCS-Anlage erkennt anhand des Parameters "Calling line identity" (CLIP) des Protokollelements CALL SETUP MESSAGE, der die IN-Servicenummer enthält, daß es sich um einen "Command Call" des intelligenten Netzes handelt.

Die PCS-Anlage legt daraufhin in Schritt 203 den anliegenden Ruf im Amt auf "Halten" und nimmt in Schritt 204 den wartenden Ruf des intelligenten Netzes an, so daß es in Schritt 205 per DTMF-Sequenz ein ACKnowledge an das intelligente Netz senden kann. Schließlich wird in Schritt 206 zum gehaltenen Ruf zurückgeschaltet. Die DTMF- und FSK-Töne werden dabei zum Endgerät hin gemutet, d.h., der Ton wird abgeschaltet, so daß die Gesprächsteilnehmer der bestehenden Verbindung von der Signalisierung nichts mitbekommen.

Das beschriebene Verfahren nach Fig. 5 setzt voraus, daß das Netz das Dienstemerkmal "CLIP on Call waiting" unterstützt.

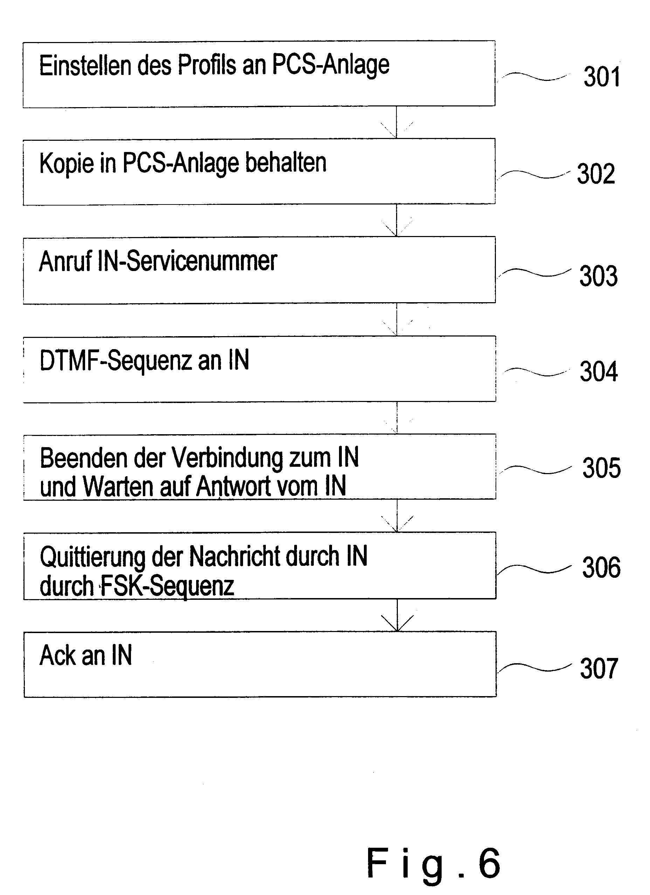

Fig. 6 stellt das Verfahren bei einer Profiländerung an der PCS-Anlage 1 und Übertragung der entsprechenden Informationen zum intelligenten Netz dar. Zunächst wird in Schritt 301 über die I/O-Schnittstelle 17 der PCS-Anlage 1 ein gewünschtes Profil an der PCS-Anlage 1 eingestellt. Eine Kopie des eingestellten Profils wird in Schritt 302 im Datenspeicher 14 abgelegt, so daß ein Teilnehmer die aktuelle Einstellung stets ohne das Erfordernis einer Signalisierung zum intelligenten Netz abfragen kann. Anschließend ruft die PCS-Anlage 1 über die Vermittlungsstelle 2 das intelligente Netz bzw. den IN-Server 6 an und übermittelt die Informationen betreffend das eingestellte Rauting-Profil per DTMF-Sequenz an das intelligente Netz (Schritt 304).

Bei Übersendung des Protokollelementes an das intelligente Netz wird die PCS-Anlage 1 bzw. der PCS-Teilnehmer anhand der von der Vermittlungsstelle 2 an das intelligente Netz standardgemäß übermittelten Nummer des analogen Anschlusses der PCS-Anlage sowie durch die PCS-Nummer des Teilnehmers identifiziert.

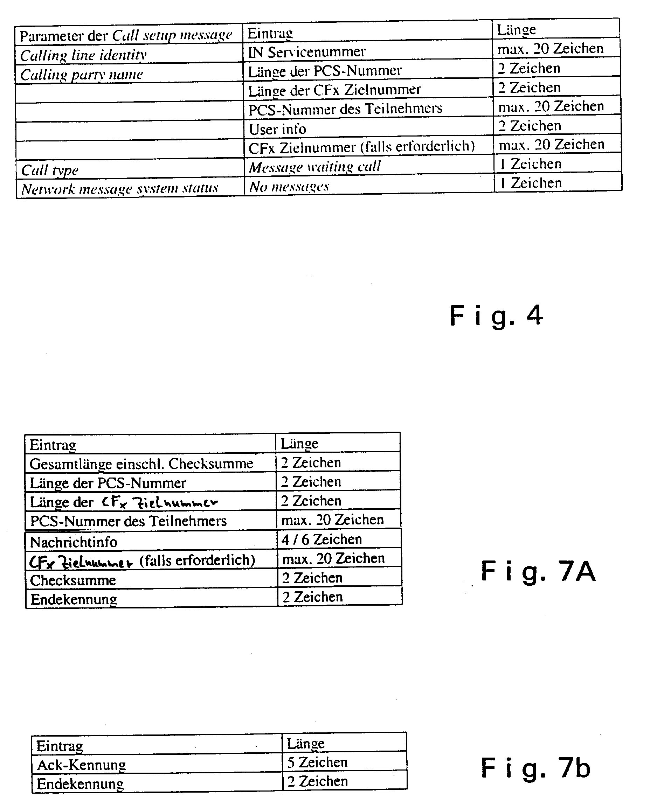

Das Format des entsprechenden DTMF-Protokollelements ist in den Figuren 7a und 7b beschrieben. Nach dem Ende der DTMF-Sequenz beendet die PCS-Anlage in Schritt 305 die Verbindung und wartet auf eine Bestätigung vom intelligenten Netz. Die Quittierung durch das intelligente Netz erfolgt in Schritt 306 durch ein CALL SETUP MESSAGE Datenelement gemäß Fig. 4. In dieser Quittierung wird die neue Einstellung aus dem intelligenten Netz übertragen. Auf die Quittierung erfolgt wiederum in Schritt 307 eine Bestätigung (ACK) durch die PCS-Anlage.

Fig. 7a zeigt den Aufbau eines DTMF-Protokollelementes zur Anzeige einer Profiländerung oder bei einer Statusabfrage. Folgende Parameter sind in dem Datenelement enthalten: Gesamtlänge einschießelich Checksumme (2 Zeichen), Länge der PCS-Nummer (2 Zeichen), Länge der CFₓ-Zielnummer (2 Zeichen), PCS-Nummer des Teilnehmers (maximal 20 Zeichen), Nachrichteninfo (4 bis 6 Zeichen), CFₓ-Zielnummer (falls erforderlich, maximal 20 Zeichen), Checksumme (2 Zeichen), Endekennung (2 Zeichen).

Die Übertragung erfolgt mittels des an sich bekannten 16-Zeichen DTMF-Codes, wie er im Standard ETS 300001, Kapitel 5 beschrieben ist. Das Element "Nachrichteninfo" codiert, ob es sich um eine Profiländerung oder um eine Statusabfrage handelt. Die Übertragungsrate beträgt etwa 5 Zeichen/pro Sekunde (bei 80 ms Tondauer, 120 ms Pause). Die Checksumme beinhaltet die Addition sämtlicher Zeichen inklusive Checksumme, aber ohne Endekennung. Die Endekennung ermöglicht eine einfache Erkennung, ob die DTMF-Sequenz vollständig empfangen wurde. Sie enthält als Wert beispielsweise "null" oder "A".

Fig. 7b zeigt den Aufbau eines ACKnowledge-Protokollelementes". Die ACK-Kennung weist einen bestimmten Wert, etwa C,F,C,F,C auf.

Für den Fall, daß der analoge Anschluß besetzt ist, jedoch eine Signalisierung von der PCS-Anlage zum intelligenten Netz erfolgen soll, wird die bestehende Verbindung von der PCS-Anlage automatisch im Amt auf "Halten" gelegt und gemäß Fig. 6 ein Ruf an das intelligente Netz mit der IN-Servicenummer aufgebaut, in dem die entsprechende Nachricht übermittelt wird. Anschließend wird die gehaltene Verbindung zurückgeschaltet. Bevorzugt erfolgt nach Ende der Verbindung sicherheitshalber eine Statusabfrage von der PCS-Anlage an das intelligente Netz.

Bei einer Statusabt rage durch die PCS-Anlage wird das gleiche Nachrichtenformat wie in Fig. 7 verwendet. Die Tatsache, daß es sich um eine Statusabfrage handelt, ist dabei in dem Element "Nachrichtinfo" codiert. Da es sich um eine Statusabfrage handelt, kann die CFx-Nummer entfallen. Die Übertragung des aktuellen Status vom intelligenten Netz an die PCS-Anlage als Antwort auf die Statusabfrage erfolgt im Rahmen eines "Status Call", der das gleiche Protokollelement wie in Fig. 4 beschrieben verwendet. Die Tatsache, daß es sich um einen "Status call" handelt, ist in dem Element "User Info" codiert.

Um bei einer Signalisierung von der PCS-Anlage zum intelligenten Netz bei besetztem Amtsanschluß die Dauer der Unterbrechung des anliegenden Gespräches so kurz wie möglich zu halten, sollte ein vereinfachtes Signalisierungsprotokoll zum intelligenten Netz verwendet werden. Hierzu können beispielsweise sehr kurze DTMF-Sequenzen verwendet werden, mit denen ggf. lediglich eine Rufumschaltung deaktiviert oder mit einer bestimmten CFₓ-Zielnummer aktiviert wird. In diesem Zusammenhang sei darauf hingewiesen, daß die in den Figuren 4 und 7 dargestellten Protokollelemente nur beispielhaft sind. Im Rahmen der Erfindung können beliebige, auf FSK-Sequenzen oder DTMF-Sequenzen basierende Protokolldatenelemente eingesetzt werden.

Verkürzte DTMF-Sequenzen können auch verwendet werden, falls dem intelligenten Netz lediglich mitgeteilt wird, wenn ein DECT-Endgerät bzw. ein Teilnehmer den DECT-Versorgungsbereich (Heimbereich) betritt. Dies wird durch die Erkennungslogik 15 (Fig. 2) erkannt und in einer Variante der Erfindung dem intelligenten Netz automatisch mitgeteilt. Das intelligente Netz deaktivert daraufhin eine Rufumleitung CFₓ bzw. leitet ankommende Rufe an die PCS-Anlage 1. Wenn die Erkennungslogik 15 meldet, daß der Teilnehmer den DECT-Versorgungsbereich wieder verlassen hat, wird dies dem intelligenten Netz wiederum automatisch durch eine DTMF-Sequenz mitgeteilt und erfolgt daraufhin wieder das im Profil definierte Routing. Statt verkürzter DTMF-Sequenzen können natürlich auch die in Fig. 7 beschriebenen Sequenzen verwendet werden.

Des weiteren sei darauf hingewiesen, daß eine wesentliche Voraussetzung für die Nutzung der PCS-Funktionalität am analogen Anschluß ist, daß die PCS-Nummer nicht identisch mit der analogen Nummer des analogen Anschlusses ist, da ansonsten der analoge Anschluß bzw. die PCS-Anlage nicht erreichbar wäre, sobald der PCS-Teilnehmer eine Rufumleitung an eine andere Nummer aktiviert hat. Bei Verwendung einer eigenen analogen Nummer am analogen Anschluß kann auch bei Vorliegen einer Rufumleitung stets eine Signalisierung vom intelligenten Netz zur PCS-Anlage erfolgen. Sofern eingehende Rufe an die PCS-Anlage geleitet werden, wird einfach die analoge Nummer als Rufumleitungsziel eingetragen.

Für den Fall eines besetzten Amtsanschlusses bleibt auch bei der erfolgreichen Signalisierung der Nachteil für den PCS-Teilnehmer, daß er nicht telefonieren kann, nachdem er (im Ausführugsbeispiel der Fig. 1) den DECT-Versorgungsbereich betreten hat und das Dual-Mode-Mobilteil 4 von GSM auf DECT umgeschaltet hat. In einer nicht gesondert darsgestellten Variante der Erfindung signalisiert die PCS-Anlage dem Dual-Mode-Mobilteil 4 daher vor der Umschaltung von GSM nach DECT, daß der Anschluß zur Zeit besetzt ist. Dies ist beispielsweise durch das Setzen des "system busy flags" durch die PCS-Anlage möglich. Ist sowohl DECT als auch GSM-Versorgung vorhanden, so kann ein intelligenter Schaltalgorithmus im Dual-Mode-Mobilteil 4 durch Auswerten des "Flags" in diesem Fall die Erreichbarkeit des PCS-Teilnehmers durch eine Verzögerung der Umschaltung auf DECT, bis das vorhandene Gespräch beendet ist, verbessern.

In einer weiteren Variante der Erfindung ist vorgesehen, bei einer Signalisierung vom intelligenten Netz zur PCS-Anlage mittels FSK-Potokollelementen in der CALL SETUP MESSAGE den in der ETS 300659-1 Norm vorgesehenen Parametern "Called line identity" ebenfalls zu verwenden, und in diesen die Nummer eines bestimmten, am analogen Anschluß angeschlossenen Endgerätes einzutragen. Die PCS-Anlage kann bei einem eingehenden Ruf dann erkennen, daß ein Ruf für ein bestimmtes Endgerät (beispielsweise das Handy) vorgesehen ist und den Ruf nur diesem Endgerät signalisieren.

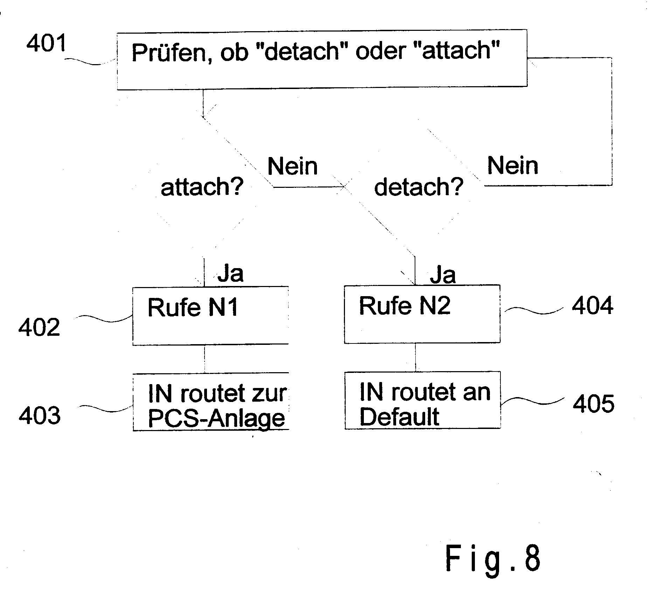

Fig. 8 zeigt ein alternatives Verfahren zur Signalisierung von einer PCS-Anlage zum intelligenten Netz. Dabei wird dem intelligenten Netz lediglich signalisiert, ob sich ein PCS-Endgerät in einem der PCS-Anlage zugeordneten Bereich befindet oder nicht. Bei Verwendung von DECT-Geräten wird dem intelligenten Netz mitgeteilt, wenn ein DECT-Endgerät in den DECT-Versorgungsbereich der PCS-Anlage eintritt bzw. diesen wieder verläßt. Die Übermittlung von Informationen vom intelligenten Netz zur PCS-Anlage ist dagegen nicht vorgesehen und damit auch keine Statusabfrage durch die Anlage. Eine direkte Einrichtung einer Rufumleitung auf eine bestimmte Rufnummer ist bei diesem Verfahren ebenfalls nicht möglich. Es werden lediglich die Informationen "Bereich betreten" und "Bereich verlassen" übertragen.

Diese Informationen werden im intelligenten Netz in die Befehle "ankommende Rufe an die PCS-Anlage routen" und "ankommende Rufe an ein defaultmäßig vorgegebenes Endgerät routen" umgesetzt. Der Vorteil des Verfahrens liegt darin, daß automatisch unter der PCS-Nummer eingehende Rufe an die PCS-Anlage gesendet werden, sobald ein PCS-Teilnehmer sich im DECT-Versorgungsbereich befindet. Dies wird durch die Erkennungslogik 15 der Fig. 2 ermittelt.

Gemäß Fig. 8 prüft die Erkennungslogik in Schritt 401 zyklisch, ob ein PCS-Teilnehmer den DECT-Versorgungsbereich betritt ("attach" bzw. "detach"). Im Falle eines "attach" ruft die PCS-Anlage automatisch eine vorgegebene, im intelligenten Netz definierte Servicenummer N1 an (Schritt 402). Daraufhin routet das intelligente Netz ankommende Rufe an die PCS-Anlage (Schritt 403).

Im Falle eines "detach" wird eine zweite, ebenfalls im intelligenten Netz definierte Servicenummer N2 automatisch angerufen (Schritt 404), worauf ankommende Rufe an eine defaultmäßig vorgegebene Rufumleitungsnummer oder eine entsprechend einem vorgegebenen Profil definierte Nummer geroutet werden (Schritt 405). Die PCS-Anlage wird in beiden Fällen vom intelligenten Netz anhand der von der digitalen Vermittlungsstelle übermittelten calling Party ID identifiziert. Nachdem das intelligente Netz den Ruf angenommen hat, legt die Anlage wieder auf.

Die Signalisierung bei besetztem analogen Anschluß eines PCS-Teilnehmers erfolgt analog der obigen Beschreibung, d.h. der anliegende Ruf wird kurzfristig zur Übertragung der Signalisierungsinformationen unterbrochen.

Die Erfindung beschränkt sich in ihrer Anwendung nicht auf die vorstehend beschriebenen Ausführungsbeispiele. Wesentlich für die Erfindung ist allein, daß ein Routen einer TK-Verbindung unter Verwendung einer an einen analogen Anschluß angeschlossenen Steuereinheit dadurch erfolgt, daß Signalisierungsinformationen zwischen dem intelligenten Netz und der Steuereinheit mittels eines Protokolls übertragen wird, das auf FSK-Signalen bzw. DTMF-Signalen aufbaut.

## Patentansprüche

1. Verfahren zum Routen einer TK-Verbindung an mindestens eines einer Mehrzahl von Endgeräten unter Verwendung eines intelligenten Netzes (IN), einer endgeräteseitigen Steuereinheit (PCS-Anlage) und einer persönlichen Rufnummer (PCS-Nummer), bei dem ein unter der persönlichen Rufnummer eingehender Verbindungswunsch in Abhängigkeit eines voreingestellten Routing-Profils vom intelligenten Netz an mindestens eines der Endgeräte geroutet wird und hierzu zwischen der Steuereinheit und dem intelligenten Netz Signalisierungsinformationen betreffend das vorzunehmende Routing übertragen werden,
**dadurch gekennzeichnet,**
daß das Verfahren an einem analogen TK-Anschluß verwirklicht wird, wobei Signalisierungsinfomationen zwischen dem intelligenten Netz und der Steuereinheit mittels eines Protokolls übertragen werden, das bei der Signalisierung vom intelligenten Netz zur Steuereinheit auf FSK-Signalen und bei der Signalisierung von der Steuereinheit zum intelligenten Netz auf DTMF-Signalen basiert.

2. Verfahren nach Anspruch 1, **dadurch gekennzeichnet,** daß ein Nutzer an der Steuereinheit das Routing-Profil einstellt bzw. ändert und Signalisierungsinformationen betreffend die Profileinstellung- bzw. änderung über DTMF-Signale an das intelligente Netz gesendet werden.

3. Verfahren nach Anspruch 2, **dadurch gekennzeichnet,** daß die Steuereinheit eine Kopie des eingestellten bzw. geänderten Profils speichert.

4. Verfahren nach mindestens einem der vorangehenden Ansprüche, **dadurch gekennzeichnet,** daß die Steuereinheit dem intelligenten Netz automatisch signalisiert, wenn sich ein der Steuereinheit zugeordnetes Endgerät, insbesondere DECT-Endgerät, in einem der Steuereinheit zugeordneten Bereich, insbesondere einem DECT-Versorgungsbereich, befindet, und ein eingehender Verbindungswunsch für diesen Fall an die Steuereinheit bzw. das dieser zugeordnete Endgerät geroutet wird.

5. Verfahren nach mindestens einem der vorangehenden Ansprüche, **dadurch gekennzeichnet,** daß die Steuereinheit eine Statusabfrage betreffend das eingestellte Profil beim intelligenten Netz vornimmt und hierzu eine DTMF-Sequenz an das intelligente Netz sendet.

6. Verfahren nach mindestens einem der vorangehenden Ansprüche, **dadurch gekennzeichnet,** daß die Steuereinheit zur Signalisierung eine Service-Nummer des intelligenten Netzes anruft, die zu übertragenden Informationen per DTMF-Sequenz an das intelligente Netz überträgt, die Verbindung beendet und anschließend auf eine Quittierung der übertragenen Information durch das intelligente Netz wartet.

7. Verfahren nach mindestens einem der vorangehenden Ansprüche, **dadurch gekennzeichnet,** daß die an das intelligente Netz übertragenen Informationen zumindest die persönliche Nummer (PCS-Nummer) des Teilnehmers und Informationen darüber, ob eine Profiländerung oder eine Statusabfrage erfolgt, enthalten.

8. Verfahren nach Anspruch 7, **dadurch gekennzeichnet,** daß als weitere Informationen die Gesamtlänge der zu übertragenden Informationen und/oder die Länge der PCS-Nummer und/oder die Länge der Rufumleitungs (CFₓ)-Zielnummer und/oder die Rufumleitungs (CFₓ)-Zielnummer und/oder eine Checksumme und/oder eine Ende-Kennung übertragen werden.

9. Verfahren nach mindestens einem der vorangehenden Ansprüche, **dadurch gekennzeichnet,** daß das intelligente Netz die Steuereinheit aufgrund eines von der zugeordneten Vermittlungsstelle standardgemäß gesendeten CALLING LINE IDENTITY Datenelements identifiziert.

10. Verfahren nach mindestens einem der vorangehenden Ansprüche, **dadurch gekennzeichnet,** daß das intelligente Netz die Steuereinheit mittels FSK-Signalen über das aktuell eingestellte Routing-Profil informiert.

11. Verfahren nach Anspruch 10, **dadurch gekennzeichnet,** daß die Informationen betreffend das Routing-Profil nach einer über das intelligente Netz vorgenommenen externen Profiländerung oder aufgrund einer Statusabfrage der Steuereinheit an die Steuereinheit übertragen werden (COMMAND CALL bzw. STATUS CALL).

12. Verfahren nach Anspruch 10, **dadurch gekennzeichnet,** daß bei einer extern veranlaßten Profiländerung das neue Routing-Profil vom intelligenten Netz erst übernommen wird, nachdem die Steuereinheit den Empfang des neuen Routing-Profils bestätigt hat.

13. Verfahren nach mindestens einem der Ansprüche 10 bis 12, **dadurch gekennzeichnet,** daß das intelligente Netz die Steuereinheit zur Signalisierung anruft und zumindest eine Service-Nummer des intelligenten Netzes, die persönliche Nummer des Teilnehmers und Informationen betreffend eine Rufumleitung (CFₓ) an die Steuereinheit sendet.

14. Verfahren nach Anspruch 13, **dadurch gekennzeichnet,** daß die zu übertragenden Informationen in einem CALL SETUP MESSAGE Protokollelement entsprechend dem Standard ETS 300 659-1 übertragen werden, wobei zumindest die Service-Nummer des intelligenten Netzes, die PCS-Nummer des Teilnehmers und Informationen betreffend eine Rufumleitung als Parametereinträge vorgesehen sind.

15. Verfahren nach Anspruch 13 oder 14, **dadurch gekennzeichnet,** daß als weitere Informationen die Länge der PCS-Nummer und/oder die Länge der Rufumleitungs (CFₓ)-Zielnummer und/oder die Rufumleitungs (CFₓ)-Zielnummer und/oder Nutzer-Informationen übertragen werden.

16. Verfahren nach mindestens einem der Ansprüche 13 bis 15, **dadurch gekennzeichnet,** daß die zu übertragenden Informationen vor dem ersten Klingelpuls oder in der Pause nach dem ersten Klingelpuls an die Steuereinheit übertragen werden.

17. Verfahren nach Anspruch 16, **dadurch gekennzeichnet,** daß die Steuereinheit den ankommenden Ruf annimmt, den Empfang der Routing-Informationen per DTMF-Sequenz bestätigt und anschließend die Verbindung mit dem intelligenten Netz beendet.

18. Verfahren nach mindestens einem der Ansprüche 13 bis 17, **dadurch gekennzeichnet,** daß der vom intelligenten Netz kommende Ruf dem Teilnehmer nicht signalisiert wird.

19. Verfahren nach mindestens einem der vorangehenden Ansprüche, **dadurch gekennzeichnet,** daß bei einer Signalisierung hin zum intelligenten Netz für den Fall, daß der analoge Anschluß besetzt ist, die bestehende Verbindung von der zugeordneten Vermittlungsstelle auf "Halten" gelegt, die zu übertragenden Informationen übertragen und dann auf die gehaltene Verbindung zurückgeschaltet wird.

20. Verfahren nach mindestens einem der vorangehenden Ansprüche, **dadurch gekennzeichnet,** daß bei einer Signalisierung hin zur Steuereinheit für den Fall, daß der analoge Anschluß besetzt ist, der vom intelligenten Netz kommende Ruf von der Vermittlungsstelle auf "Warten" gelegt, ein CALL SETUP MESSAGE Protokollelement mit den zu übertragenden Informationen an die Steuereinheit übertragen wird, die Steuereinheit den bestehenden Ruf in der Vermittlungsstelle auf "Halten" legt, den Ruf des intelligenten Netzes annimmt, eine Bestätigung (ACKnowledge) an das intelligente Netz sendet und anschließend auf die gehaltene Verbindung zurückgeschaltet.

21. Verfahren nach mindestens einem der vorangehenden Ansprüche, **dadurch gekennzeichnet,** daß als Endgerät ein Dual-Mode Mobilteil eingesetzt wird, das neben dem DECT-Standard einen weiteren Standard für zelluläre Netze unterstützt, insbesondere den GSM-Standard.

22. Verfahren zum Routen einer TK-Verbindung an mindestens eines einer Mehrzahl von Endgeräten unter Verwendung eines intelligenten Netzes (IN), einer endgeräteseitigen Steuereinheit (PCS-Anlage) und einer persönlichen Rufnummer (PCS-Nummer), bei dem ein unter der persönlichen Rufnummer eingehender Verbindungswunsch in Abhängigkeit von einem voreingestellten Profil geroutet wird,
**dadurch gekennzeichnet,**
daß das Steuergerät dem intelligenten Netz automatisch signalisiert, ob sich ein der Steuereinheit zugeordnetes Endgerät in einem der Steuereinheit zugeordneten Bereich befindet, und das intelligente Netz in Abhängigkeit von diesen Signalisierungsinformationen einen ankommenden Ruf an die Steuereinheit oder ein defaultmäßig vorgegebenes Endgerät routet.

23. Verfahren nach Anspruch 22, **dadurch gekennzeichnet,** daß die Signaliserungsinformationen durch zwei unterschiedliche Servicenummern (N1, N2) kodiert werden, die im intelligenten Netz definiert sind, wobei die Steuereinheit die eine oder die andere Servicenummer in Abhängigkeit davon anruft, ob das Endgerät sich in dem der Steuereinheit zugeordneten Bereich befindet oder nicht.

24. Verfahren nach Anspruch 22 oder 23, **dadurch gekennzeichnet,** daß es sich bei dem dem Endgerät zugeordneten Bereich im einen DECT-Versorgungsbereich handelt und die Steuereinheit dem intelligenten Netz mitteilt, ob sich ein DECT-Endgerät im DECT-Versorgungsbereich befindet oder nicht.

25. Verfahren nach mindestens einem der Ansprüche 22 bis 24, **dadurch gekennzeichnet,** daß das intelligente Netz in Abhängigkeit von den Signaliserungsinformationen der Steuereinheit eine Rufumleitung (CFₓ) aktiviert oder deaktiviert.

26. Steuereinheit zur Durchführung des Verfahrens nach Anspruch 1,
**gekennzeichnet durch**
a) Mittel (11) zum Empfang von FSK-Signalen;
b) Mittel (12) zum Generieren von DTMF-Signalen;
c) eine I/O Schnittstelle (17), über die ein Nutzer ein Routing-Profil einstellen oder ändern kann, und
d) Steuermittel (13), die mit den Mitteln (11) zum Empfang von FSK-Signalen, den Mitteln (12) zum Generieren von DTMF-Signalen und der I/O Schnittstelle (17) verbunden sind, empfangene FSK-Signale auswerten und die in Abhängigkeit vom eingestellten Routing-Profil und /oder empfangener FSK-Signale Steuersignale zur Generierung von DTMF-Signalen erzeugen.

27. Steuereinheit nach Anspruch 26, **dadurch gekennzeichnet,** daß des weiteren eine Erkennungslogik (15) vorgesehen ist, die erkennt, ob sich ein Endgerät (4) in einem der Steuereinheit (1) zugeordneten Bereich befindet.

28. Steuereinheit nach Anspruch 26 oder 27, **dadurch gekennzeichnet,** daß des weiteren ein Datenspeicher (14) zum Speichern eines Routing-Profils vorgesehen ist.

29. Steuereinheit nach mindestens einem der Ansprüche 26 oder 28, **dadurch gekennzeichnet,** daß die Steuereinheit (1) in eine DECT und/oder eine GSM Basisstation integriert ist.
